# EUROPEAN PATENT APPLICATION

(11) **EP 4 312 144 A1**
(43) Date of publication of application: **31.01.2024**
(21) Application number: 23183221.3
(22) Date of filing: 04.07.2023
(51) Int. Cl.: G06F 30/20, G06F 30/23, G06F 30/27, G06F 30/398, G06N 3/045, G06N 3/08

(54) **SEMICONDUCTOR DEVICE SIMULATION SYSTEM AND METHOD**

(30) Priority: 28.07.2022 KR 20220093713
(71) Applicant: Samsung Electronics Co., Ltd., Suwon-si, Gyeonggi-do 16677 (KR)
(72) Inventor: JANG, Won Ik, 16677 Suwon-si (KR); MYUNG, Sang Hoon, 16677 Suwon-si (KR); CHOE, Jae Myung, 16677 Suwon-si (KR)
(74) Representative: Marks & Clerk LLP

(57) **Abstract**

Systems and methods for simulating a semiconductor device, a method among includes; generating meshes associated with a simulated semiconductor device using a semiconductor device simulator, extracting nodes from information associated with the meshes, extracting edges connected between the nodes using information associated with the meshes, generating graph information in relation to the nodes and edges, applying the graph information to a graph neural network (GNN) learning model, and predicting change in the meshes in response to change in state information applied to the simulated semiconductor device using the GNN learning model.

## Description

### BACKGROUND

### 1. Technical Field

The inventive concept relates to methods and systems providing simulation(s) of a semiconductor device (hereafter generally, "semiconductor device simulation system and/or method"). More particularly, the inventive concept relates to semiconductor device simulation systems and methods using a graph neural network (GNN).

### 2. Description of the Related Art

Generation of a predictive simulation for a semiconductor device may often be very time consuming and may also require considerable costs. For instance, simulation of one or more attribute(s) of a semiconductor device in accordance with variable conditions associated with one or more fabrication process(es) used to manufacture the semiconductor device may require enormous computational resources. Additionally or alternately, simulation of one or more attribute(s) of the semiconductor device in accordance with operating state(s) of the semiconductor device in variable physical environment(s) may demand enormous computational resources. That is, in order to comprehensively perform a variety of physical analyses associated with the simulation of the semiconductor device, a great deal of time and/or resources must often be expended. Further, contemporary simulations - when encompassing a number of factors - may prove less accurate than desired.

### SUMMARY

Consistent with aspects of the inventive concept, some embodiments provide a method of simulating a semiconductor device exhibiting improved predictive accuracy and greater efficiency. In some aspects, systems and methods according to embodiments of the inventive concept use change in meshes that characterize a simulated semiconductor device to predict change in one or more attribute(s) of a semiconductor device. In some aspects, systems and methods according to embodiments of the inventive concept simulate a semiconductor device in relation to change in one or more fabrication process(es) used to manufacture the semiconductor device and/or change in an operating or environment condition (e.g., bias condition(s)) applied to the semiconductor device. However, such technical aspects associated with the inventive concept are not restricted to only those explicitly set forth herein, whereas other technical aspects may be clearly understood by those skilled in the art upon consideration of the following detailed description.

According to one aspect of the inventive concept, a semiconductor device simulation system includes; a random access memory (RAM) storing a semiconductor device simulator, wherein the semiconductor device simulator is configured to generate a simulated semiconductor device and further configured to generate meshes associated with the simulated semiconductor device, and a central processing unit (CPU) configured to execute the semiconductor device simulator, wherein the CPU is configured to extract nodes and edges connected between the nodes from information associated with the meshes, generate graphed meshes using graph information generated in relation to the nodes and edges, and predict change in the meshes in response to change in state information applied to the simulated semiconductor device using a graph neural network (GNN) learning model that receives the nodes and edges as inputs.

According to another aspect of the inventive concept, a method of simulating a semiconductor device includes; generating meshes associated with a simulated semiconductor device using a semiconductor device simulator, extracting nodes from information associated with the meshes, extracting edges connected between the nodes using information associated with the meshes, generating graph information in relation to the nodes and edges, applying the graph information to a graph neural network (GNN) learning model, and predicting change in the meshes in response to change in state information applied to the simulated semiconductor device using the GNN learning model.

According to another aspect of the inventive concept, a computer system includes; at least one processor, and a non-transitory storage medium storing instructions that when executed by the at least one processor cause the at least one processor to generate graphed meshes by generating graph information associated with nodes and edges connected between the nodes using meshes generated in relation to a simulated semiconductor device, and predict change in the meshes in response to change in state information applied to the simulated semiconductor device using a graph neural network (GNN) learning model receiving the graph information as an input.

According to another aspect of the inventive concept, a non-transitory computer readable storage medium including instructions that when executed by at least one processor cause the at least one processor to generate graphed meshes by generating graph information associated with nodes and edges connected between the nodes in relation to meshes generated in relation to a simulated semiconductor device, and predict change in the meshes in response to change in state information applied to the simulated semiconductor device using a graph neural network (GNN) learning model that receives the graph information as an input.

At least some of the above and other feautres of the invention are set out in the claims.

### BRIEF DESCRIPTION OF THE DRAWINGS

The above and other aspects and features of the inventive concept will become more apparent upon consideration of the following detailed description together with the accompanying drawings, in which:
FIG. 1 is a block diagram illustrating a semiconductor device simulation system according to embodiments of the inventive concept;
FIG. 2 is a flowchart summarizing a method of simulating a semiconductor device according to embodiments of the inventive concept;
FIG. 3 is computer generated image illustrating a portion of a simulated semiconductor device generated by a semiconductor device simulator;
FIG. 4 is a conceptual diagram illustrating certain exemplary meshes, edges and nodes associated with the portion of the simulated semiconductor device of FIG. 3;
FIG. 5 is a conceptual diagram illustrating exemplary node features extracted using information associated with the meshes of FIG. 4;
FIG. 6 is a conceptual diagram illustrating an exemplary edge matrix extracted using information associated with the meshes of FIG. 4;
FIG. 7 is a table listing exemplary state information that may be applied to the simulated semiconductor device;
FIG. 8 is a block diagram further illustrating the method of simulating the semiconductor device of FIG. 2;
FIG. 9 is a graph illustrating accuracy of a current-voltage curve generated using a method of simulating a semiconductor device according to embodiments of the inventive concept;
FIG. 10 is another computer generated image illustrating a portion of the simulated semiconductor device generated by a semiconductor device simulator and further illustrating change in predicted meshes associated with the semiconductor device;
FIG. 11 is a flowchart illustrating another method of simulating a semiconductor device according to embodiments of the inventive concept;
FIG. 12 is a conceptual diagram illustrating a plurality of graph neural networks to which multi-hops have been applied;
FIG. 13 is a block diagram further illustrating the method of simulating a semiconductor device of FIG. 11;
FIG. 14 is a flowchart illustrating still another method of simulating a semiconductor device according to embodiments of the inventive concept;
FIG. 15 is a block diagram further illustrating the method of simulating a semiconductor device of FIG. 14;
FIG. 16 is a block diagram illustrating a computer system according to embodiments of the inventive concept; and
FIG. 17 is a block diagram illustrating a system according to embodiments of the inventive concept.

### DETAILED DESCRIPTION

Throughout the written description and drawings, like reference numbers and labels are used to denote like or similar elements, components, features and/or method steps.

Figure (FIG.) 1 is a block diagram illustrating a semiconductor device simulation system 100 providing a simulation of a semiconductor device according to embodiments of the inventive concept.

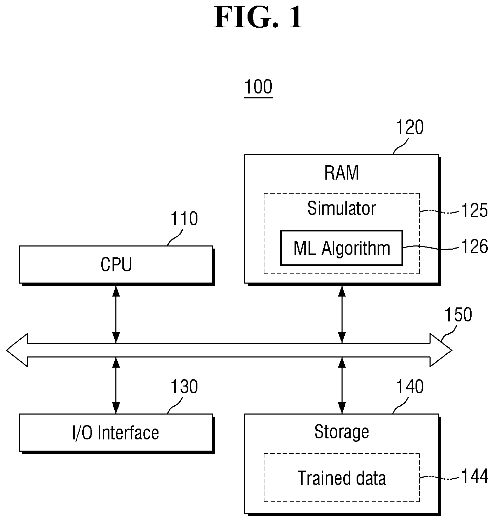

Referring to FIG. 1, the semiconductor device simulation system 100 may include a central processing unit (CPU) 110, a random access memory (RAM) 120, an input/output (I/O) interface 130, data storage 140 and a system bus 150.

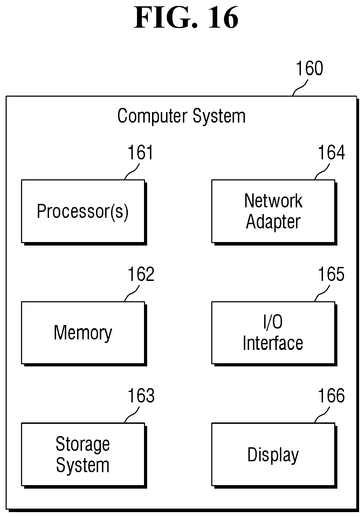

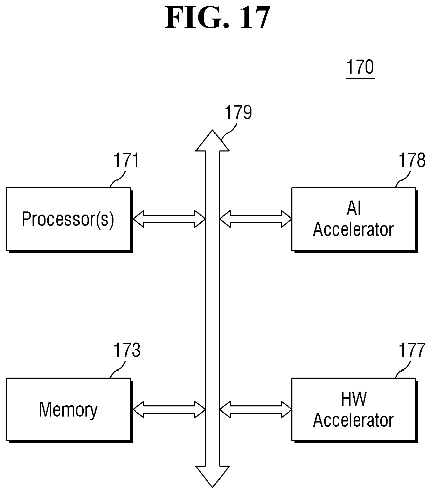

Herein, the semiconductor device simulation system 100 may be implemented as a dedicated device performing simulation(s) of semiconductor device(s) using machine learning (e.g., a graph neural network (GNN) learning model). For example, the semiconductor device simulation system 100 may be implemented using a computer or a workstation capable of driving a design program (e.g., a computer-aided design (TCAD) simulation program). Examples of such will be described hereafter in some additional detail with reference to FIGS. 16 and 17.

Accordingly, in this regard, the CPU 110 may execute software (e.g., one or more application program(s), one or more operating system(s), and/or one or more device driver(s)) in order to functionally enable the semiconductor device simulation system 100. For example, the CPU 110 may execute the enabling software, however specifically implemented, in relation to an operating system stored in the RAM 120. That is, the CPU 110 may execute a variety of application program(s) configured to be driven by the operating system. In this regard, the CPU 110 may execute a semiconductor device simulator 125 stored in the RAM 120, wherein the semiconductor device simulator 125 may include a machine learning (ML) algorithm 126 operating in relation to the GNN learning model and various learning (or "trained") data 144 stored in, for example, the storage 140. That is, the semiconductor device simulation system 100 may simulate the operation and/or performance of a particular semiconductor device by driving of the semiconductor device simulator 125.

Here, one or both of the operating system and the application program(s) may be loaded in the RAM 120. Upon booting of the semiconductor device simulation system 100, an operating system image stored in the storage 140 may be loaded to the RAM 120 in accordance with an established booting sequence.

One or more I/O operations associated with the semiconductor device simulation system 100 may be supported by the operating system. Accordingly, various application program(s) may be loaded to RAM 120 in response to user selections or in accordance with defined or basic system services.

In some embodiments, the semiconductor device simulator 125 may also be loaded from the storage 140 to the RAM 120. Here, the RAM 120 may be variously implemented using volatile memory (e.g., static random access memory (SRAM) and/or dynamic random access memory (DRAM)) and/or nonvolatile memory (e.g., Phase-change RAM (PRAM), magnetic RAM (MRAM), resistance RAM (ReRAM), ferroelectric RAM (FRAM), NAND-type flash memory and/or NOR-type flash memory).

In some embodiments, the semiconductor device simulator 125 may be configured to perform a semiconductor device simulation using the ML algorithm 126 including the GNN learning model. That is, the semiconductor device simulator 125 may be used to generate a semiconductor device to be simulated (hereafter, "the simulated semiconductor device"). Accordingly, a number of meshes may be generated in relation to the simulated semiconductor device. Thereafter, the CPU 110 may be used to extract a plurality of nodes using information associated with the meshes. The CPU 110 may also be used to extract a number of edges connected between the plurality of nodes using information associated with the meshes. In this manner, the CPU 110 may generate graphed meshes by extracting information associated with the plurality of nodes, as well as the edges associated with the meshes. Thereafter, the CPU 110 may predict one or more change(s) (hereafter, "change") in the meshes in accordance with change in various state information (e.g., bias condition(s)) applied to the simulated semiconductor device using the GNN learning model to which the graphed meshes are applied (or input). Using this approach the prediction accuracy of the simulation may be improved despite improvements in efficiency with respect to various change in the meshes. The foregoing features will be described in some additional detail hereafter.

The I/O interface 130 may be used to control the interconnection and operation of one or more user input and/or output devices. For example, the I/O interface 130 may facilitate the connection and use of a keyboard, a mouse, a monitor, a display, etc., thereby allowing receipt of commands, instructions and/or data from a user, and further providing the user with audio and/or visual information regarding the progress of the semiconductor device simulation system 100 as well as simulation results. Target data used to train the semiconductor device simulator 125 may be communicated through the I/O interface 130.

The storage 140 may be variously implemented as storage medium supporting operation of the semiconductor device simulation system 100. In this regard, the storage 140 may be used to store application program(s), operating system image(s), and/or various data. In some embodiments, the storage 140 may be used to store and update trained data 144 associated with the semiconductor device simulator 125. Here, the storage 140 may be implemented using a memory card (e.g., MMC, eMMC, SD, MicroSD, or the like) and/or a hard disk drive (HDD). Alternately or additionally, the storage 140 may include a NAND-type flash memory and/or a next-generation nonvolatile memory such as PRAM, MRAM, ReRAM or FRAM, or a NOR flash memory.

The system bus 150 may be used to variously interconnect components of the semiconductor device simulation system 100. That is, the CPU 110, RAM 120, I/O interface 130, and storage 140 may be electrically interconnected via the system bus 150 such that various data may be efficiently communicated (i.e., transmitted and/or received). In some embodiments, the system bus 150 may includes capabilities that arbitrate the communication of data among the various components of semiconductor device simulation system 100. Those skilled in the art will appreciate that the system bus 150 may be variously configured and that additional or alternate components may be included in the semiconductor device simulation system 100.

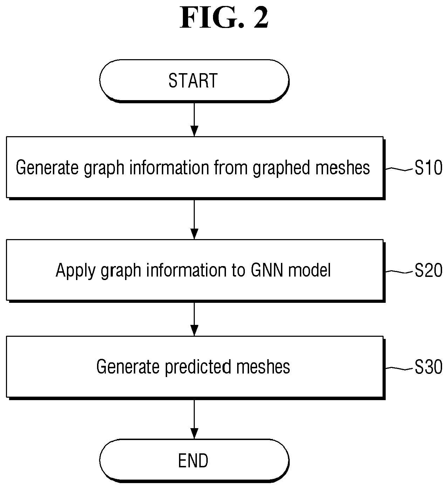

FIG. 2 is a flowchart illustrating in one example a method of simulating a semiconductor device according to embodiments of the inventive concept. In this context the phrase "simulating a semiconductor device" may be understood as providing or generating a simulation of the semiconductor device.

Referring to FIGS. 1 and 2, the semiconductor device simulator 125 may be used to generate the simulated semiconductor device. That is, the semiconductor device simulator 125 may be used to generate a number of meshes associated with the simulated semiconductor device.

From the generated meshes, the CPU 110 may extract a plurality of nodes using information associated with the meshes. The CPU 110 may also extract a plurality of edges existing between the plurality of nodes using information associated with the meshes. In this manner the CPU 110 may essentially "graph" the meshes and generate graph information associated with the graphed meshes by extracting information related to the plurality of nodes and the plurality of edges related to the meshes (S10).

Once the graph information has been generated, the CPU 110 may apply (or input) the graph information to the GNN learning model (S20) which also receives the graphed meshes as an input.

Thereafter, change in the meshes corresponding to change in various state information (e.g., bias condition(s)) applied to the simulated semiconductor device may be generated by the GNN learning model, and by predicting change in the meshes in this manner, the GNN learning model may be used to generate predicted meshes (S30). Using this method of simulating a semiconductor device, embodiments of the inventive concept provide improved prediction accuracy and simulation efficiency with respect to change in the meshes.

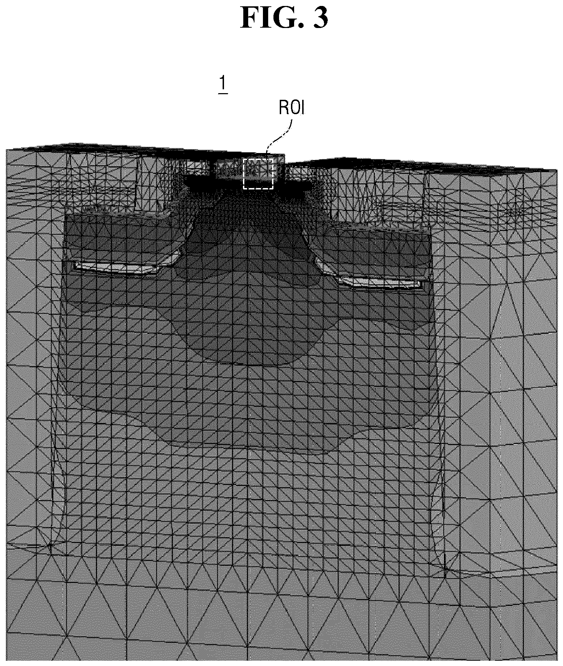

FIG. 3 is an exemplary view illustrating a simulated semiconductor device 1 that may be generated using the semiconductor device simulator 125.

Referring to FIGS. 1, 2 and 3, the simulated semiconductor device 1 (or portion of the simulated semiconductor device 1) generated by the semiconductor device simulator 125 is assumed to be a three-dimensional (3D) structure including at least one transistor (hereafter, "the transistor") that will be fabricated using one or more semiconductor process(es). Accordingly, the meshes provided by the semiconductor device simulator 125 may be used to define a structure of the transistor.

In some embodiments, a state of at least part of the three-dimensional structure defined for the transistor may be considered. For example, a bias (e.g., a voltage and/or a current) applied to a substrate SUB portion, a source, a drain, or a gate of the transistor may be considered. In this regard, a particular portion of the 3D structure may be referred to as a region of interest (or ROI).

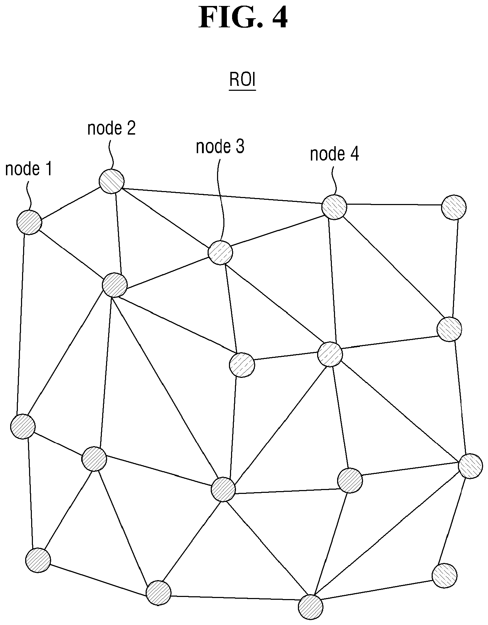

FIG. 4 is a conceptual diagram illustrating a ROI associated with the simulated semiconductor device 1 of FIG. 3. Here, the ROI includes a plurality of nodes (e.g., node 1, node 2, node 3, node 4 . . . ) and a related combination of connected edges associated with various meshes corresponding to a portion of the simulated semiconductor device 1 of FIG. 3. However, those skilled in the art will appreciate that the conceptual illustration of FIG. 4 is merely an example of many ROIs that may be exist and be evaluated in relation to the simulated semiconductor device 1, wherein each ROI may have a different shape and include a different combination of meshes, edges, and/or nodes.

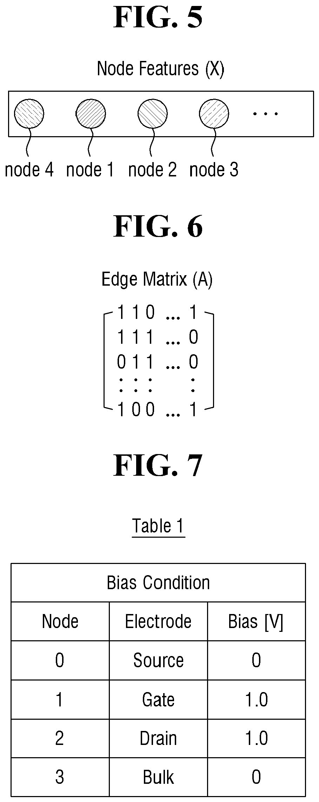

FIG. 5 is a conceptual diagram illustrating exemplary node features that might be extracted based on information associated with the meshes of FIG. 4. Thus, referring to FIGS. 1, 3, and 5, it is assumed that the CPU 110 extracts the plurality of nodes associated with the meshes generated by the semiconductor device simulator 125 for the example of FIG. 4. That is, the CPU 110 may generate (or identify) nodes, generate various node features in relation to the nodes, and populate a node feature matrix X with the nodes having various node features. In this regard, the nodes and corresponding node features may be generated using information associated with the meshes, as provided by the semiconductor device simulator 125 in relation to the simulated semiconductor device 1.

FIG. 6 is a conceptual diagram illustrating an edge matrix (A) generated (or extracted) in relation to information associated with the meshes of FIG. 4.

Referring to FIGS. 1, 3, and 6, it is further assumed that the CPU 110 extracts the edge matrix A including information related to connected edges between the nodes of the meshes of FIG. 4 using information (e.g., input information) associated with the simulated semiconductor device, as provided by the semiconductor device simulator 125. That is, the CPU 110 may generate the edge matrix A from information associated with the edges connected between the nodes (e.g., node 1, node 2, node 3 and node 4) based on information associated with the meshes, as provided by the semiconductor device simulator 125 in relation to at least one ROI of the simulated semiconductor device 1.

For example and with reference to FIG. 6, upon reviewing the edge matrix A, it may be understood that each of the rows and columns represents a respective node, wherein based upon a determination of whether an edge has been formed between respective nodes, an edge value may be defined as '1' (e.g., for a formed edge) or '0' (e.g., for a not-formed edge).

Thus, referring to the edge matrix A of FIG. 6 and the conceptual diagram of FIG. 4, information associated with various edges may be expressed in relation to positioning within the edge matrix A. So, for example, a first edge associated with a first row and a first column is formed between node 1 and node 1; a second edge associated with the second row and the first column is formed between the node 1 and node 2; a third edge associated with the first row and a third column is not formed between node 1 and node 3, etc. Hence, the node feature matrix X of FIG. 5 may be understood as an input vector that may be applied to the GNN, and the edge matrix A of FIG. 6 may be understood as an adjacency matrix for the node feature matrix X of FIG. 5 and may be another input vector that may be applied to the GNN.

FIG. 7 is a table listing exemplary state information that may be applied to the simulated semiconductor device consistent with embodiments of the inventive concept.

Referring to FIGS. 1 and 7, the CPU 110 generate and communicate various graph information (e.g., node feature matrix X of FIG. 5 and/or edge matrix A of FIG. 6) associated with the graphed meshes as input(s) to the GNN learning model in relation to meshes corresponding to the simulated semiconductor device 1 of FIG. 3. Thereafter, change in the meshes in response to change in various state information (e.g., one or more bias condition(s)) applied to the simulated semiconductor device 1 may be predicted using the GNN learning model receiving the graphed meshes as an input.

In this regard, state information to be applied GNN learning model in relation to the simulated semiconductor device 1 may include, for example, the bias conditions listed in the Table 1 of FIG. 7. For example, it is assumed that a 0th node (node 0) of the simulated semiconductor device 1 is associated with a source of the transistor; a 1st node (node 1) of the simulated semiconductor device 1 is associated with a gate of the transistor; a 3rd node (node 2) of the simulated semiconductor device 1 is associated with a drain of the transistor; and a 4th node (node 3) of the simulated semiconductor device 1 is associated with a bulk (e.g., a substrate SUB) of the transistor. Accordingly, bias conditions may be defined wherein 0V is applied to the 0th node (node 0), 1V is applied to the first node (node 1), 1V is applied to the second node (node 2), and 0V is applied to the third node (node 3).

It follows from the foregoing assumptions, that the CPU 110 may predict change in the meshes in response to change in the state information described by the bias conditions listed in Table 1 of FIG. 7, as applied to the simulated semiconductor device 1 in the context of the GNN learning model that receives the graphed meshes as an input based on the meshes generated for the simulated semiconductor device 1 of FIG. 3.

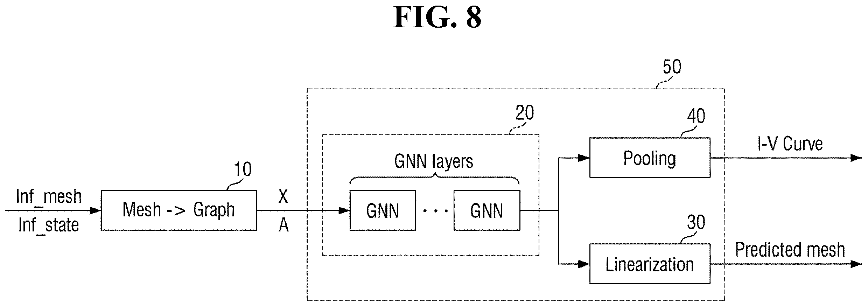

FIG. 8 is a block diagram further illustrating in one example the method of simulating a semiconductor device described in relation to FIG. 2 according to embodiments of the inventive concept.

Referring to FIGS. 1, 2 and 8, the semiconductor device simulator 125 may again be used to generate a simulated semiconductor device. That is, a number of meshes may be generated in relation to the simulated semiconductor device. In some embodiments, the semiconductor device simulator 125 may be a TCAD simulation program.

Thereafter, the CPU 110 may be used to extract a plurality of nodes (e.g., the node feature matrix X of FIG. 5) using information associated with the generated meshes (hereafter, "mesh information" (or Inf_mesh). In this regard, the mesh information (Inf_mesh) may be expressed as input information to-be-applied to the GNN learning model 50 having, for example, a 'dat' and/or `grd' format. The CPU 110 may also be used to extract a plurality of edges (e.g., the edge metric A of FIG. 6) variously connected (or formed) between the nodes using the mesh information (Inf_mesh), and the CPU 110 may also be used to extract graph information, including for example, information associated with the nodes and the edges related to graphed meshes (10).

Thereafter, the CPU 110 may communicate the graph information (e.g., the node feature matrix X of FIG. 5 and the edge metric A of FIG. 6) associated with the graphed meshes as an input to the GNN learning model 50. Here, various GNN layers 20 included in the GNN learning model 50 may include a plurality of graph neural networks (GNN). For example, the plurality of GNN may include a continuous first graph neural network and a continuous second graph neural network. Accordingly, an output of the first graph neural network may be received as an input to the second graph neural network. In this case, the output of the first graph neural network communicated to the second graph neural network may be an output subject to layer normalization.

With this configuration an output that predicts change in the meshes in response to change in state information (e.g., the bias condition) applied to the simulated semiconductor device may be generated by the GNN layers 20 that receive the graphed meshes as input(s). Then, the CPU 110 may collect (or pool) 40 output(s) predicted change in the meshes, and as a further result in some embodiments, various current-voltage curve(s) (I-V curve) related to the state information (Int state) for the simulated semiconductor device 1 (e.g., of FIG. 3) may be generated. In some embodiments, the predicted change provided by the GNN layers 20 may be subject to a linearization process 30 (performed e.g., by the CPU 110) in order to yield the predicted meshes.

Thus, in some embodiments, the GNN learning model contemplated by the method of FIG. 8 may be understood as facilitating the method steps of (1) performing learning using a plurality of graph neural networks, (2) pooling results of the learning using the plurality of graph neural networks, and thereafter (3) generating at least one current-voltage curve as an output for the simulated semiconductor device in response to the learning using the plurality of graph neural networks.

Alternately or additionally, in some embodiments, the GNN learning model contemplated by the method of FIG. 8 may be further understood as facilitating the method steps of (1) performing learning using a plurality of graph neural networks to generate a learning result, (2) linearizing the learning result using the plurality of graph neural networks to generate a linearized result, and thereafter (3) predicting change in the meshes in response to the linearized result.

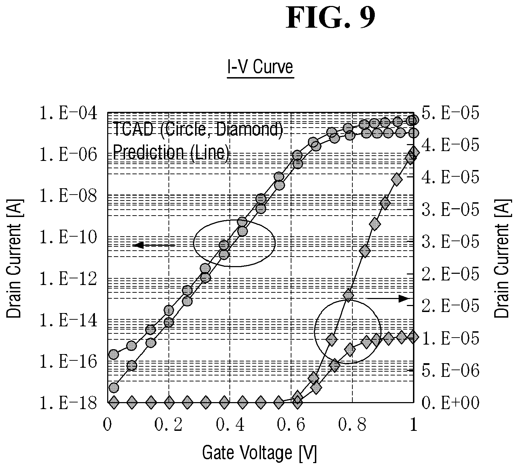

FIG. 9 is a graph illustrating for certain embodiments a resulting accuracy for the current-voltage curves (I-V curve) generated by the method of simulating a semiconductor device according to embodiments of the inventive concept.

Referring to FIGS. 1, 8 and 9, the CPU 110 may be used to determine accuracy of a current-voltage curve (I-V curve) generated by the pooling of outputs that predict change in the meshes (i.e., changed meshes). In the graph of FIG. 9, a solid line expresses a corresponding current-voltage curve (I-V curve) extracted in response to change in predicted meshes associated with the simulated semiconductor device. That is, each graph line including either a circle or a diamond is a current-voltage curve (I-V curve) resulting from change in the state information (Int state) as applied to the simulated semiconductor device 1 using, for example, the semiconductor device simulator 125.

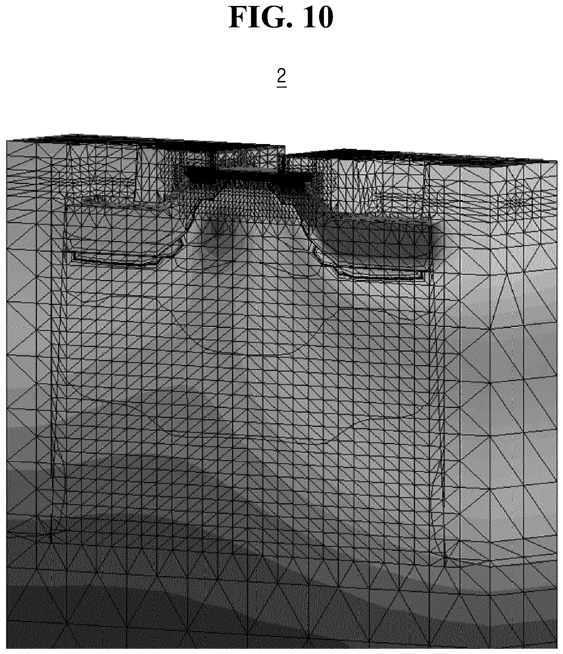

As shown in FIG. 9, the prediction accuracy for the extracted current-voltage curve (I-V curve) is excellent based on change related to the predicted meshes associated with the simulated semiconductor device according to embodiments of the inventive concept. That is, referring to FIGS. 1, 8 and 9, the CPU 110 may linearize 30 output(s) predicting change in the meshes (i.e., changed meshes), wherein a semiconductor device 2 corresponding to the changed meshes may be expressed by FIG. 10, as compared with FIG. 3.

Referring to FIGS. 1, 3, 8, and 10, the semiconductor device 2 may be extracted based on change in the predicted meshes related to (or originating from) the semiconductor device 1 by operation of the semiconductor device simulation system 100 according to embodiments of the inventive concept. That is, as described above, the semiconductor device simulator 125 may be used to generate a simulated semiconductor device in relation to number of (original) meshes. The CPU 110 may then extract nodes using the information associated with the meshes, and extract edges connected between the nodes using the information associated with the meshes. Thereafter, the CPU 110 may generate graphed meshes by extracting information related to the nodes and edges in relation to the meshes. Then, the CPU 110 may predict change in the meshes in response to change in state information (e.g., bias condition) applied to the simulated semiconductor device using the GNN learning model receiving as input(s) the graphed meshes. This approach has been shown to markedly improve prediction accuracy and efficiency of simulation associated with change in the meshes.

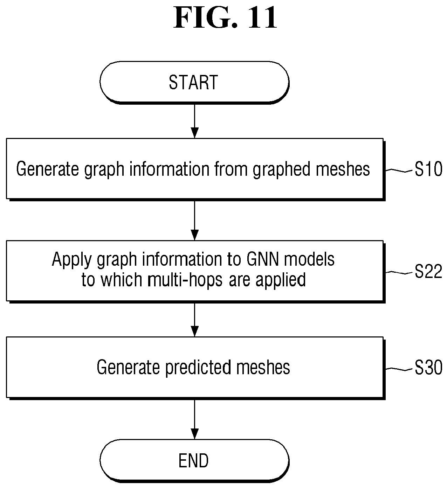

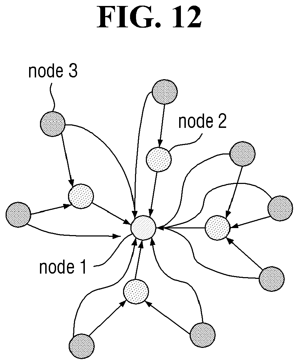

FIG. 11 is a flowchart illustrating in another example a method of simulating a semiconductor device according to embodiments of the inventive concept. The method of FIG. 11 may be compared with the method of FIG. 2, wherein method steps S22 replaces method steps S20. In this regard, graph information associated with the graphed meshes may be applied to a plurality of GNN models to which multi-hops are applied (S22). For example, FIG. 12 is a conceptual diagram illustrating in one example a pluralty of GNN models to which the multi-hops are applied.

In this regard, the term "hop" may be used in relation to one type of node (e.g., node 1, node 2 or node 3). That is, in a case of applying a single hop, for example, when change in the first node 1 is predicted, only features of the second node 2 are reflected. That is, the prediction for a given node makes use of information from connected nodes only. In contrast, in a case applying the multi-hops, for example, when change in the first node 1 is predicted, the change in the first node 1 may be predicted by reflecting a feature of the second node 2 reflecting a feature of the third node 3. That is, the prediction for a given node may make use of information from nodes connected through linked nodes. Each hop may represent a distance one node further away from a given node along the graph. The prediction accuracy and efficiency of the method and system for simulating a semiconductor device according to some embodiments may be further increased through use of multi-hops.

Consistent with the example of FIGS. 11 and 12, FIG. 13 is a block diagram further illustrating in another example a method of simulating a semiconductor device using a semiconductor device simulation system according to embodiments of the inventive concept, wherein multi-hops are applied to the system.

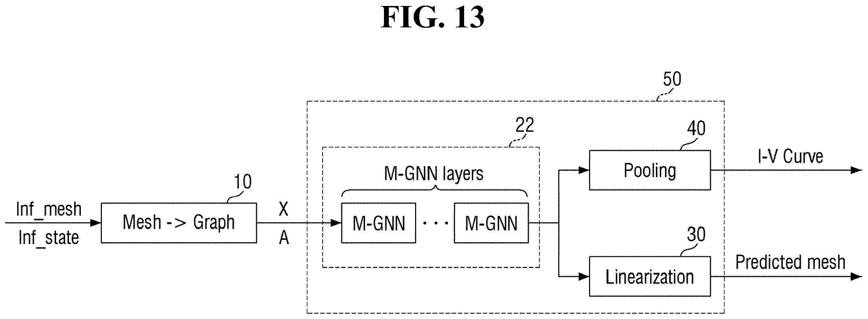

Comparing FIG. 8 and method step (S20) to the FIG. 13 and method step S22, the GNN learning model 50 of FIG. 13 is assumed to use multiple graph neural networks (M-GNN) (22) to which the multi-hops are applied.

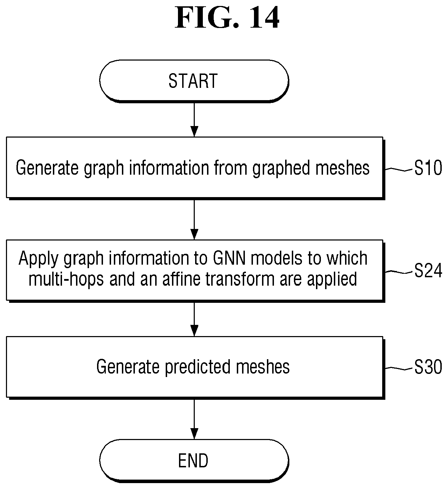

FIG. 14 is a flowchart illustrating in still another example a method of simulating a semiconductor device according to embodiments of the inventive concept, wherein method step S24 replaces method step S22 of FIG. 1 or method steps S20 of FIG. 8.

Referring to FIG. 14, the graph information associated with the graphed meshes may be applied to a plurality of graph neural networks (GNN) to which an affine transformation is additionally applied along with the multi-hops (S24). Here, those skilled in the art will understand the nature and use of the affine transformation. For example, the affine transformation may be a linear operation performed on each layer of the plurality of graph neural networks (GNN). In some embodiments, the affine transformation may be understood as a linear mapping method that preserves nodes and edges.

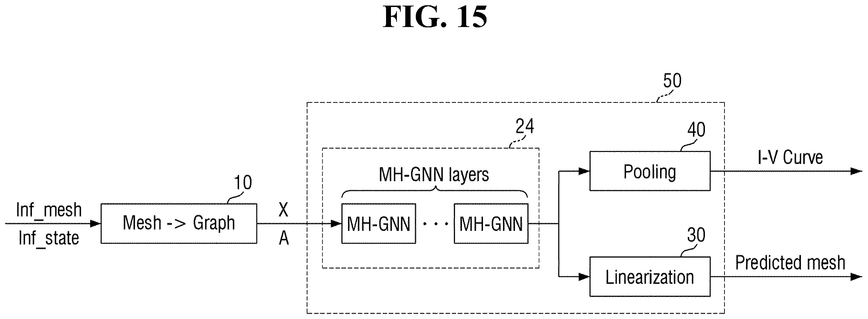

FIG. 15 is a block diagram further illustrating the method of FIG. 14 according to embodiments of the inventive concept.

Referring to FIG. 15, in place of the graph neural networks (M-GNN) (22) to which the multi-hops are applied in FIG. 13, the graph neural network (GNN) learning model 50 of FIG. 15 may use a plurality of graph neural networks (MH-GNN) (24) to which the multi-hops and the affine transformation are applied.

In some embodiments, methods and systems simulating a semiconductor device according to embodiments of the inventive concept described in relation to FIGS. 1 to 15, inclusive, may be performed by a computing system like the ones described hereafter in relation to FIGS. 16 and 17.

For example, each of the blocks illustrated in FIGS. 8, 13 and 15 may correspond to hardware, software or a combination of hardware and software included in the computing system. The hardware may include at least one of a programmable component such as a central processing unit (CPU), a digital signal processor (DSP) or a graphics processing unit (GPU), a reconfigurable component such as a field programmable gate array (FPGA), and a component such as an intellectual property (IP) block that provides a fixed function. The software may include at least one of a series of instructions executable by the programmable component and a code convertible into a series of instructions by a compiler and may be stored in a non-transitory storage medium.

FIG. 16 is a block diagram illustrating a computer system 160 according to embodiments of the inventive concept.

Referring to FIG. 16, the computer system 160 may be used to execute (or perform) a method of simulating a semiconductor device consistent with embodiments described above with reference to FIGS. 1 to 15.

The computer system 160 may refer to any system including a general purpose or special purpose computing system. For example, the computer system 160 may include a personal computer, a server computer, a laptop computer and a home appliance. As illustrated in FIG. 16, the computer system 160 may include at least one processor 161, a memory 162, a storage system 163, a network adapter 164, an I/O interface 165 and a display 166.

The at least one processor 161 may execute a program module including computer system executable instructions. The program module may include routines, programs, objects, components, logic data structures, which perform specific tasks or implement specific abstract data types. The memory 162 may include a computer system readable medium in the form of a volatile memory (e.g., a RAM). The at least one processor 161 may access the memory 162 and execute instructions loaded into the memory 162. The storage system 163 may store information non-volatilely, and may include at least one program product including a program module configured to perform training of machine learning models for the purpose of predicting the change in the plurality of meshes described above with reference to drawings in some embodiments. As the program is a non-limiting example, it may include an operating system, at least one application, other program modules and program data.

The network adapter 164 may provide access to a local area network (LAN), a wide area network (WAN), and/or a public network (e.g., the Internet). The I/O interface 165 may provide a communication channel with peripheral devices such as a keyboard, a pointing device and an audio system. The display 166 may output different types of information for the user to check them.

In some embodiments, the training of the machine learning models for the purpose of predicting the plurality of meshes described above may be implemented with a computer program product. The computer program product may include a non-transitory computer-readable medium (or storage medium) including computer-readable program instructions for the at least one processor 161 to perform image processing and/or training of the models. As the computer-readable instructions are a non-limiting example, it may include assembly instructions, instruction set architecture (ISA) instructions, machine instructions, machine dependent instructions, micro-codes, firmware instructions, state setting data, or source codes or object codes written in at least one programming language.

The computer-readable medium may be any type of medium capable of non-temporarily holding and storing instructions executed by the at least one processor 161 or any instruction executable device. The computer-readable medium may be an electronic storage device, a magnetic storage device, an optical storage device, an electromagnetic storage device, a semiconductor storage device, or any combination thereof, but the inventive concept is not limited thereto. For example, the computer-readable medium may be a portable computer diskette, a hard disk, a RAM, a read-only memory (ROM), an electrically erasable read-only memory (EEPROM), flash memory, SRAM, a compact disk (CD), a digital video disk (DVD), a memory stick, a floppy disk, a mechanically encoded device such as punch-cards, or any combination thereof.

FIG. 17 is a block diagram illustrating a system 170 according to embodiments of the inventive concept.

Referring to FIG. 17, the system 170 may perform the method for simulation for a semiconductor device according to some embodiments described above with reference to FIGS. 1 to 15. Accordingly, the system 170 may have low complexity and may quickly generate accurate results.

Referring to FIG. 17, the system 170 may include at least one processor 171, a memory 173, an artificial intelligence (AI) accelerator 175, and a hardware accelerator 177, and the at least one processor 171, the memory 173, the AI accelerator 175 and the hardware accelerator 177 may communicate with each other via a bus 179. In some embodiments, the at least one processor 171, the memory 173, the AI accelerator 175 and the hardware accelerator 177 may be included in one semiconductor chip. Furthermore, in some embodiments, at least two of the at least one processor 171, the memory 173, the AI accelerator 175 and the hardware accelerator 177 may be included in two or more semiconductor chips mounted on a board, respectively.

The at least one processor 171 may execute instructions. For example, at least one processor 171 may execute an operating system by executing the instructions stored in the memory 173 or may execute applications executed on the operating system. In some embodiments, the at least one processor 171 may instruct the AI accelerator 175 and/or the hardware accelerator 177 to perform a task, by executing the instructions, and may obtain a result of performing the task from the AI accelerator 175 and/or the hardware accelerator 177. In some embodiments, the at least one processor 171 may be an application specific instruction set processor (ASIP) customized for a specific use or may support a dedicated instruction set.

The memory 173 may have an arbitrary structure for data storage. For example, the memory 173 may include a volatile memory device such as DRAM or SRAM, or may include a non-volatile memory device such as a flash memory or a RRAM. The at least one processor 171, the AI accelerator 175 and the hardware accelerator 177 may store data (e.g., the node feature matrix X of FIG. 5, the edge matrix A of FIG. 6, and/or the Table 1 of FIG. 7) in the memory 173 via the bus 179 or read the data from the memory 173.

The AI accelerator 175 may refer to hardware designed for AI applications. In some embodiments, the AI accelerator 175 may include a neural processing unit (NPU) for implementing a neuromorphic structure, may generate output data by processing input data provided from the at least one processor 171 and/or the hardware accelerator 177, and may provide the output data to the at least one processor 171 and/or the hardware accelerator 177. In some embodiments, the AI accelerator 175 may be programmable, and it may be programmed by the at least one processor 171 and/or the hardware accelerator 177.

The hardware accelerator 177 may refer to hardware designed to perform a specific operation at high speed. For example, the hardware accelerator 177 may be designed to perform data conversion such as demodulation, modulation, encoding and decoding at high speed. The hardware accelerator 177 may be programmable, and it may be programmed by the at least one processor 171 and/or the hardware accelerator 177.

In some embodiments, the AI accelerator 175 may execute the machine learning models described above with reference to the drawings. For example, the AI accelerator 175 may execute each of the aforementioned layers. The AI accelerator 175 may generate an output including useful information by processing input parameters and feature maps. Furthermore, in some embodiments, at least part of the models executed by AI accelerator 175 may be executed by at least one processor 171 and/or hardware accelerator 177.

Embodiments described herein make use of one or more trained neaural network models for making predictions (in this case, predicting change in the meshes based on change in state information). A neural network model (e.g. a graph neural network model) may be configured to make predictions based on parameters of the neural network model. The neural network model may be trained to produce more accurate predictions by updating the parameters of the model to optimize an objective function (e.g. maximize a reward from a reward function or minimize a loss from a loss function).

Embodiments described herein enable efficient simulation of a semiconductor device to determine change in the semiconductor device dependent on change in state information (e.g. bias conditions). This allows the semiconductor device to be tested without requiring manufacture. The determined change in the semiconductor device can be used to determine improved bias conditions and/or an improved design for the semiconductor device. That is, multiple designs and/or bias conditions may be tested using the simulation system, and a design may be selected based on these tests.

The selected design may by output for use in manufacturing a semiconductor device according to the selected design. The output may be in the form of instructions (or multiple sets of instructions) for instructing one or more machines to manufacture a semiconductor device according to the selected design. The instructions may be computer-executable instructions for controlling one or more machines to manufacture a semiconductor device according to the selected design. In addition, or alternatively, the selected design may be output (e.g. displayed or output to an external system) for use by a user in manufacturing a semiconductor device according to the selected design.

Although embodiments of the inventive concept have been described above with reference to the accompanying drawings, it will be understood by those of ordinary skill in the art that the inventive concept is not limited thereto and may be implemented in many different forms without departing from the technical idea or essential features thereof. Therefore, it should be understood that the embodiments set forth herein are merely examples in all respects and not restrictive.

## Claims

1. A semiconductor device simulation system, comprising:
a random access memory storing a semiconductor device simulator, wherein the semiconductor device simulator is configured to generate a simulated semiconductor device and is further configured to generate meshes associated with the simulated semiconductor device; and
a central processing unit configured to execute the semiconductor device simulator,
wherein the central processing unit is configured to:
extract nodes and edges connected between the nodes from information associated with the meshes,
generate graphed meshes using graph information generated in relation to the nodes and edges, and
predict change in the meshes in response to change in state information applied to the simulated semiconductor device using a graph neural network, hereinafter referred to as GNN, learning model that receives the nodes and edges as inputs.

2. The semiconductor device simulation system of claim 1, wherein the semiconductor device simulator includes a machine learning algorithm in which the GNN learning model operates.

3. The semiconductor device simulation system of claim 1 or claim 2, wherein the GNN learning model is configured to learn using a plurality of graph neural networks.

4. The semiconductor device simulation system of claim 3, wherein the plurality of graph neural networks includes a continuous first graph neural network and a continuous second graph neural network, and
the second graph neural network receives as an input, an output value subject to layer normalization of the first graph neural network.

5. The semiconductor device simulation system of any preceding claim, wherein the GNN learning model is configured to perform learning using a plurality of graph neural networks to which multi-hops are applied.

6. The semiconductor device simulation system of claim 5, wherein the GNN learning model is further configured to perform learning using the plurality of graph neural networks to which the multi-hops are applied by applying an affine transformation.

7. The semiconductor device simulation system of any preceding claim, wherein the GNN learning model is configured to:
perform learning using a plurality of graph neural networks,
pool results of the learning using the plurality of graph neural networks, and
generate a current-voltage curve for the simulated semiconductor device in response to the learning using the plurality of graph neural networks.

8. The semiconductor device simulation system of any preceding claim, wherein the GNN learning model is configured to
perform learning using a plurality of graph neural networks to generate a learning result,
linearize the learning result using the plurality of graph neural networks to generate a linearized result, and
predict change in the meshes in response to the linearized result.

9. A method of simulating a semiconductor device, the method comprising:
generating meshes associated with a simulated semiconductor device using a semiconductor device simulator;
extracting nodes from information associated with the meshes;
extracting edges connected between the nodes using information associated with the meshes;
generating graph information in relation to the nodes and edges;
applying the graph information to a graph neural network, hereinafter referred to as GNN, learning model; and
predicting change in the meshes in response to change in state information applied to the simulated semiconductor device using the GNN learning model.

10. The method of claim 9, wherein the semiconductor device simulator is a computer-aided design simulation program.

11. The method of claim 9 or claim 10, wherein the extracting of the nodes from information associated with the meshes includes generating at least one of a node feature matrix and an edge matrix.

12. The method of any of claims 9-11, wherein GNN layers included in the GNN learning model include a plurality of graph neural networks.

13. The method of claim 12, wherein:
the plurality of graph neural networks includes a continuous first graph neural network and a continuous second graph neural network,
an output generated by the first graph neural network is received as an input by the second graph neural network, and
the output of the first graph neural network is subjected to layer normalization.

14. The method of any of claims 9-13, wherein the predicting of change in the meshes in response to change in state information applied to the simulated semiconductor device using the GNN learning model includes at least one of
pooling predicted change in the meshes to generate at least one current-voltage curve related to the state information for the simulated semiconductor device, and
applying a linearization process to predicted change in the meshes to generate a predicted mesh.

15. A computer system, comprising:
at least one processor; and
a non-transitory storage medium storing instructions that when executed by the at least one processor cause the at least one processor to:
generate graphed meshes by generating graph information associated with nodes and edges connected between the nodes using meshes generated in relation to a simulated semiconductor device; and
predict change in the meshes in response to change in state information applied to the simulated semiconductor device using a graph neural network learning model receiving the graph information as an input.
